Europäisches Patentamt

European Patent Office

Office européen des brevets

(19)

(11) Publication number: **0 064 211**
**B1**

(12) **EUROPEAN PATENT SPECIFICATION**

(45) Date of publication of patent specification: **23.07.86**

(51) Int. Cl.⁴: **C 04 B 41/90, H 01 B 1/16**

(21) Application number: **82103282.8**

(22) Date of filing: **19.04.82**

(54) **A method of forming electrodes on ceramic bodies to provide electronic components.**

(30) Priority: **30.04.81 JP 65623/81**

(43) Date of publication of application:
**10.11.82 Bulletin 82/45**

(45) Publication of the grant of the patent:
**23.07.86 Bulletin 86/30**

(84) Designated Contracting States:
**DE FR GB NL**

(56) References cited:
**EP-A-0 059 348**
**EP-A-0 059 851**
**EP-A-0 059 852**
**DE-A-2 222 754**
**GB-A- 927 205**
**US-A-3 736 167**
**US-A-3 784 407**

(73) Proprietor: **Taiyo Yuden Co., Ltd.**
**2-12, Ueno 1-chome**
**Taito-ku Tokyo (JP)**

(72) Inventor: **Nobutatsu, Yamaoka**
**226-7, Nakasatomi Harunamachi**
**Gunma-gun Gunma-ken (JP)**
Inventor: **Kazuo, Sasazawa**
**2-15-13, Otonemachi Maebashi-shi**
**Gunma-ken (JP)**

(74) Representative: **Wey, Hans-Heinrich, Dipl.-Ing.**
**et al**
**Patentanwälte Müller-Börner & Wey**
**Widenmayerstrasse 49**
**D-8000 München 22 (DE)**

## Description

The present invention pertains to a method of forming electrodes on ceramic bodies to provide electronic components, comprising the steps of coating an electroconductive paste on desired surfaces of each ceramic body and baking the coatings.

As is well known, in the fabrication of such electronic components using ceramic materials as capacitors, varistors, thermistors and vibrators, the electrodes or conductors are formed by baking the coatings of electroconductive pastes on ceramic bodies. Typical of such pastes as heretofore used is what is known as a silver paste, composed of powdered silver, a glass frit, and a vehicle or the liquid ingredient or ingredients of the paste.

The silver paste is itself an excellent material for the purposes. When used for the electrodes of ceramic capacitors, for example, it can provide desired capacitance, dielectric loss tangent (the tangent of the dielectric loss angle), bond strength between the formed electrodes and the ceramic bodies, and easy solderability of leads to the electrodes. Offsetting all these advantages, however, is the expensiveness of silver, a precious metal, which adds very much to the costs of the electronic components.

This invention remedies the noted problem of the prior art and provides a novel method of fabricating electrodes or conductors on ceramic bodies to provide desired electronic components, with use of a remarkably less expensive substitute for the conventional silver paste. The electrodes or conductors prepared by the inventive method are notable for their favorable electrical and mechanical properties, in addition to their inexpensiveness.

The use of an electroconductive paste composed of pulverized zinc and a vehicle, with or without one or more of additives such as glass frits, metal oxides, and organometallic compounds, has been disclosed in the earlier patent documents EP—A—59348, EP—A—59851 and EP—A—59852, which were however published after the filing date of the present application. This paste for use with the inventive method will hereinafter be referred to as the zinc paste for simplicity and in contradistinction to the conventional silver paste.

Stated in brief, the zinc paste is coated on desired surfaces of a ceramic body. The zinc paste coatings are baked or fired at a temperature ranging from the melting point to boiling point of zinc, thereby forming electroconductive base layers on the ceramic body. Then in accordance with the method of this invention an overlay of a more solderable metal is electroplated on each base layer.

Zinc melts at 419°C. and boils at 907°C. Baked at a temperature between these limits, the zinc paste coatings form electroconductive base layers firmly adhering to the ceramic body. These zinc base layers are poor in solderability, however. By plating a more solderable metal on the base layers, as by electroplating of nickel or copper, there can be obtained electrodes of desired solderability. The electronic components having their electrodes thus fabricated from the zinc paste, with the solderable overlays, are almost as favorable in electrical and mechanical properties as those having the conventional silver electrodes. As regards the inexpensiveness of the electrodes produced by the inventive method, suffice it to say that powdered zinc is available at approximate 1/200 the cost of powdered silver.

The above and other features and advantages of this invention and the manner of attaining them will become more apparent, and the invention itself will best be understood, from a study of the following more detailed description taken together with the attached drawings, in which:—

Figure 1 is a fragmentary sectional view diagrammatically illustrating, on a greatly magnified scale, a conductive region formed on a ceramic body from the zinc paste by the method of the present invention, the view being explanatory of the way in which the unoxidized interiors of the individual zinc particles become fused to each other on baking;

Figure 2 is a diametrical section through a ceramic capacitor having a pair of electroconductive base layers fabricated by the method of the invention;

Figure 3 is also a diametrical section through the ceramic capacitor of Figure 2, showing the capacitor after the creation of solderable overlays on the base layers to complete the electrodes by the method of the invention; and

Figure 4 is a plan view explanatory of the way in which the ceramic capacitor of Figure 3 is tested as to the strength with which the electrodes adhere to the ceramic body against tensile stress.

The present invention suggests the use of the zinc paste composed principally of pulverized zinc, preferably in the form of spherical particles with an average size ranging from 0.1 to 30.0 μm, for the fabrication of the electrodes or conductors of some electronic ceramic components. In most cases the zinc paste may contain an additive or additives chosen from among various glass frits, organo-metallic compounds, and metal oxides, the preferred examples of which will be recited subsequently. Pasted with a suitable vehicle, the zinc powder together with or without the selected additive or additives can be coated on desired surfaces of ceramic bodies in any known or suitable manner.

The subsequent firing of the zinc paste coatings, however, must be conducted in the temperature range specified for the zinc paste by the invention. This temperature range is from the melting point to boiling point of zinc.

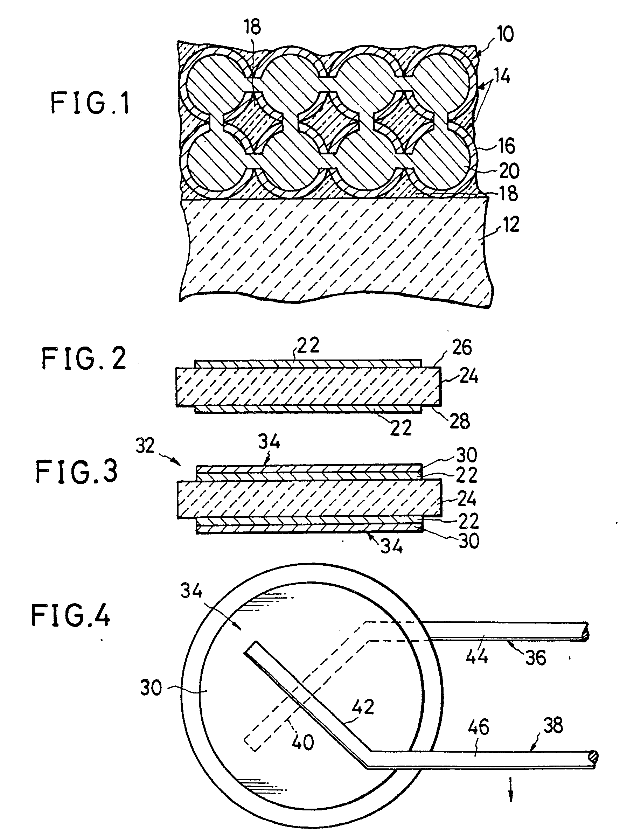

How the zinc paste forms conductive regions on ceramic bodies, and why it should be baked in the above specified temperature range, will now be discussed with reference to Figure 1. The discussion will

2

also make clear that the use of zinc powder as the main ingredient of the paste is no arbitrary choice but an outcome of extensive experimentation.

Explanatory of the unique behavior of the zinc paste on firing, Figure 1 is a greatly magnified, fragmentary section through, for instance, a ceramic capacitor comprising an electroconductive base layer 10, forming a part of one of its electrodes, and a ceramic body 12. The base layer 10 is made from the zinc paste, coated on the ceramic body 12 and baked at a temperature anywhere between the melting and boiling points of zinc. When so heated, each zinc particle 14, herein shown to be of spherical shape, undergoes oxidation and bears an oxide cladding 16. If the zinc powder has been mixed with an additive or additives chosen from the above listed substances, the additive or additives fill the interstices of the zinc particles, as identified by the reference numeral 18. Consequently the oxidation of the zinc powder does not proceed deep into each particle 14. With the continued application of heat the unoxidized interiors 20 of the zinc particles melt and expand at a greater rate than their oxide claddings 16, until the zinc interiors disrupt the oxide claddings and become bridged to each other as shown. Thus is fabricated the coherently bonded base layer 10 having good electrical conductivity and firmly adhering to the ceramic body 12. It will also have been seen that the additive or additives in the zinc paste function as inorganic binder and zinc oxidation inhibitor or retarder, making it possible to bake the zinc paste coatings in atmosphere.

The base layer 10 produced as above has one weakness, namely, poor solderability. In accordance with the method of this invention, therefore, an overlay of a more solderable metal is formed by electroplating on the base layer to complete the electrode. Such solderable overlays can be formed by electrolytic plating of, typically, nickel or copper, as will be detailed later.

Described hereinbelow are Examples of the invention, dealing with specific examples of the zinc paste as actually produced, and with the physical properties of ceramic capacitors that had their electrodes fabricated from the zinc paste examples by the method of the invention. These Examples, however, are meant purely to illustrate or explain and not to impose limitations upon the invention.

Examples 1—48

The particular electroplating method used in these Examples was what was known as barrel plating.

Except in Example 1, as represented in Tables 1 and 2, zinc powder of the grade set forth below was admixed with one or more of the glass frits, organo-titanium compounds, and metal oxides specified below, in various proportions expressed in weight parts with respect to 100 parts by weight of the zinc powder.

The following zinc powder, glass frits, organotitanium (organometallic) compounds, metal oxides, and vehicle were prepared to formulate zinc pastes of various possible compositions in accordance with the invention:

Zinc powder: Spherical particles with diameters ranging from 0.1 to 30.0 $\mu$m. The zinc powder was of such purity as to contain approximately 0.01% by weight of impurities such as cadmium and iron.

Glass frits: One composed of litharge (PbO), borix oxide ($B_2O_3$) and silica ($SiO_2$), consisting of 325-mesh particles and having a softening point of 560°C., and another composed of zinc oxide (ZnO), $B_2O_3$ and $SiO_2$, also consisting of 325-mesh particles and having a softening point of 660°C.

Organotitanium (organometallic) compounds: Tetrakisstearoxy-titanium, $Ti(O—C_{17}H_{35})_4$, in powder form with a particle size up to 30 $\mu$m, and di-i-propoxybisacetylacetonatetitanium, $Ti(O—iC_3H_7)_2[OC(CH_3)CHCOCH_3]_2$, in the form of a solution, with toluene as the solvent.

Metal oxides: Red lead oxide ($Pb_3O_4$), bismuth trioxide ($Bi_2O_3$), praseodymia ($Pr_6O_{11}$), black copper oxide (CuO), and cadmium oxide (CdO), all in powder form with a particle size ranging from 0.1 to 15.0 $\mu$m.

Vehicle: Alpha-terpineol admixed with 5% by weight ethylcellulose as an organic binder.

These ingredients were mixed together in various combinations set forth in Tables 1 and 2, to prepare 48 zinc pastes of different compositions. The zinc pastes contain the zinc powder and the vehicle as the two essential ingredients, so that Tables 1 and 2, as well as all the following tables, list only the additives used and their proportions in weight parts with respect to 100 parts by weight of the zinc powder. For simplicity the capitals A, B, C and D are used in all the tables given herein to refer to the following additives more specifically recited above:

A: The PbO—$B_2O_3$—$SiO_2$ glass frit.
B: The ZnO—$B_2O_3$—$SiO_2$ glass frit.
C: $Ti(O—C_{17}H_{35})_4$ (organometallic compound).
D: $Ti(O—iC_3H_7)_2[OC(CH_3)CHCOCH_3]_2$ (organometallic compound).

The tabulated weight parts of the additive D are exclusive of the toluene used as the solvent. The amount of the vehicle (alpha-terpineol) was approximately 20% of the weight of the zinc powder, or in cases of the use of an additive additives, of the total weight of the zinc powder and the additive or additives.

The 48 different mixtures of the above enumerated ingredients were agitated for approximately 15 hours to prepare the zinc pastes of Examples 1—48. These zinc pastes are the starting materials for the fabrication of electrodes on ceramic bodies by the method of the invention.

The particular electronic ceramic component chosen to illustrate the invention was the capacitor. The dielectric ceramic bodies of capacitors, on which the above prepared zinc pastes were to be coated and baked to provide electrodes, were fabricated through the following procedure. There was first prepared a ceramic mixture of 98.8 mole % strontium titanate ($SrTiO_3$), 0.8 mole % germanium dioxide ($GeO_2$), and 0.4

mole % niobium oxide ($Nb_2O_5$), admixed with polyvinyl alcohol as an organic binder. After having been agitated, the admixture was molded into discs at a pressure of approximately one ton per square centimeter. The disk-like moldings were then baked for three hours at a temperature of 1420°C. in a furnace, in which there was a reductive atmosphere of 98% by capacity molecular nitrogen ($N_2$) and 2% by capacity molecular hydrogen ($H_2$). The ceramic discs thus formed had each a diameter of eight millimeters (mm) and a thickness of 0.4 mm.

The ceramic discs were then coated with a $PbO$—$B_2O_3$—$Bi_2O_3$ glass paste. The coated ceramic discs were heated to and held for three hours at a temperature of 1200°C., thereby causing diffusion of the glass ingredients into the ceramic to insulate its particles.

With the zinc pastes and the ceramic discs prepared as in the foregoing, these were processed into capacitors, as shown in Figures 2 and 3, by the method of this invention. First, for the fabrication of electroconductive base layers 22 on the opposite faces of each ceramic disc 24 as in Figure 2, each zinc paste was coated or "printed" on one face 26 of each of several ceramic discs through a 200-mesh Teflon (trademark) screen. The coated discs were introduced into a drying furnace for drying the coatings at 150°C. for 10 minutes. Then each zinc paste was coated on the other faces 28 of the discs, and the coatings were likewise dried. Then, placed on an iron net, the ceramic discs with the dried coatings were introduced into a tunnel-shaped heater, in which the coatings were baked at approximately 700°C., intermediate the melting point (419°C.) and boiling point (907°C.) of zinc, for 10 minutes in exposure to atmosphere. The coated ceramic discs were held in the heater for a total of 40 minutes including the time for raising and lowering its temperature.

Thus were completed the conductive base layers 22 on the ceramic discs 24. Each base layer had a diameter of 7.8 mm and a thickness of 15 μm.

The next step is the formation of solderable overlays on the base layers 22 on the ceramic discs.

Preparatory to the barrel plating of solderable overlays on the base layers, the articles of Figure 2 were cleaned by immersion in a 10% by weight aqueous solution of ammonia. Then the cleaned articles were introduced into a nickel electroplating bath containing 300 g/l of nickel sulfamate, $Ni(SO_3NH_2)_2$, 5 g/l of nickel chloride, $NiCl_2 \cdot 6H_2O$, and 40 g/l of boric acid, $H_3BO_3$. At a temperature of 60°C. and a current density of four amperes per square decimeter ($A/dm^2$), nickel was barrel plated on the zinc base layers to provide solderable overlays as in Figure 3. The plated articles were then rinsed with water.

Figure 3 shows at 30 the solderable overlays thus created by the electroplating on the base layers 22 of each ceramic capacitor 32. Each solderable overlay 30 had a thickness of about two μm. The reference numeral 34 in this figure generally denotes each electrode, comprising the base layer 22 and the solderable overlay 30, of each capacitor 32.

The ceramic capacitors 32 with the Zn-Ni electrodes 34 were then tested as to capacitance, dielectric loss tangent, the solderability of the electrodes, and the strength with which the electrodes adhere to the ceramic discs 24 against pulling stress. Tables 1 and 2 represent the results. In these and all the following tables each listed value is the average of 10 samples.

Also, in all the tables given herein, the capacitances of the capacitors represent the values measured at a frequency of 1 kHz, in nanofarads (nF). The dielectric loss tangents of the capacitors represent 100 times the values measured at 1 kHz. For the actual values of dielectric loss tangent, therefore, the tabulated figures should be multiplied by $10^{-2}$.

The solderability of the Zn-Ni electrodes 34 was ascertained through the following procedure. The electrodes were first treated with a flux containing rosin and isopropyl alcohol in a weight ratio of one to nine. The capacitors 32 with the thus pretreated electrodes 34 were then dipped for about three seconds in a bath of lead (Pb)-tin (Sn) solder heated to a temperature of 250°C. The total weight of the Pb-Sn solder adhering in hemispherical shape to the pair of electrodes 34 of each capacitor, on its withdrawal from the molten solder bath, was measured. In Tables 1 and 2 and all the following tables the solderability of each capacitor is described as "excellent" if the total weight of the solder attached to its electrodes was more than 50 milligrams (mg), and as "good" if the total weight was in the range of 20—50 mg. The lower limit of acceptable solderability was set at 20 mg because, as has been ascertained by experiment, terminals could then be soldered to the electrodes without difficulty.

Figure 4 is explanatory of the method employed for measurement of the strength with which the Zn-Ni electrodes 34 of each capacitor 32 adhere to the ceramic disc 24 against tensile load. Two annealed copper wires 36 and 38 were prepared for each capacitor to be tested, each wire having a length of 35 mm and a diameter of 0.6 mm. Each wire was bent at a point approximately 4 mm from one end into an angle of 130°. The bent ends 40 and 42 of the wires were soldered to the respective electrodes 34, or to their nickel overlays 30, each with use of about 30 mg of solder. In thus soldering the wires to the electrodes their shank portions 44 and 46 were laid parallel to each other, with a spacing of some 5 mm. Then, with one wire 36 held against movement, the other was pulled slowly in the arrow marked direction via a spring scale, until either of the electrodes came off the ceramic disc. The reading in kilograms (kg) of the spring scale at that instant is given in the tables as the tensile strength of each capacitor.

TABLE 1

| Examples | Zinc paste composition | | | Capacitor properties | | | |
|---|---|---|---|---|---|---|---|
| | Glass frit A, weight part | Organo-metallic compound C, weight part | Metal oxide in use and weight part | Capacitance, nF | Dielectric loss tangent, $\times 10^{-2}$ | Solderability | Tensile strength, kg |
| 1 | ...... | ...... | ...... | 53 | 1.48 | Good | 0.9 |
| 2 | 0.01 | ...... | ...... | 55 | 1.30 | Good | 1.3 |
| 3 | 5.00 | ...... | ...... | 62 | 0.88 | Excellent | 2.4 |
| 4 | 10.00 | ...... | ...... | 55 | 1.34 | Good | 1.3 |
| 5 | ...... | 0.01 | ...... | 54 | 1.39 | Good | 1.2 |
| 6 | ...... | 5.00 | ...... | 60 | 0.98 | Excellent | 1.6 |
| 7 | ...... | 15.00 | ...... | 56 | 1.34 | Good | 1.2 |
| 8 | 0.01 | 0.01 | ...... | 54 | 1.33 | Good | 1.3 |
| 9 | 0.01 | 14.99 | ...... | 54 | 1.37 | Good | 1.2 |
| 10 | 10.00 | 0.01 | ...... | 55 | 1.36 | Good | 1.2 |
| 11 | 0.01 | ...... | CdO, 0.01 | 55 | 1.30 | Good | 1.2 |
| 12 | 0.01 | ...... | CdO, 5.00 | 56 | 1.33 | Good | 1.2 |
| 13 | 10.00 | ...... | CdO, 5.00 | 55 | 1.37 | Good | 1.3 |
| 14 | 0.01 | ...... | $Pb_3O_4$, 0.01 | 56 | 1.28 | Good | 1.1 |
| 15 | 0.01 | ...... | $Pb_3O_4$, 5.00 | 56 | 1.34 | Good | 1.2 |
| 16 | 10.00 | ...... | $Pb_3O_4$, 5.00 | 56 | 1.36 | Good | 1.1 |
| 17 | 0.01 | ...... | $Bi_2O_3$, 0.01 | 56 | 1.31 | Good | 1.2 |
| 18 | 0.01 | ...... | $Bi_2O_3$, 5.00 | 55 | 1.34 | Good | 1.3 |
| 19 | 10.00 | ...... | $Bi_2O_3$, 5.00 | 55 | 1.38 | Good | 1.1 |

TABLE 1—Continued

| Examples | Zinc paste composition | | | Capacitor properties | | | |
| --- | --- | --- | --- | --- | --- | --- | --- |
| | Glass frit A, weight part | Organo-metallic compound C, weight part | Metal oxide in use and weight part | Capacitance, nF | Dielectric loss tangent, $\times 10^{-2}$ | Solderability | Tensile strength, kg |
| 20 | ...... | 0.01 | $Pr_6O_{11}$, 0.01 | 55 | 1.34 | Good | 1.2 |
| 21 | ...... | 0.01 | $Pr_6O_{11}$, 5.00 | 55 | 1.39 | Good | 1.2 |
| 22 | ...... | 15.00 | $Pr_6O_{11}$, 5.00 | 54 | 1.39 | Good | 1.1 |
| 23 | ...... | 0.01 | $CuO$, 0.01 | 55 | 1.35 | Good | 1.2 |
| 24 | ...... | 0.01 | $CuO$, 5.00 | 55 | 1.37 | Good | 1.3 |
| 25 | ...... | 15.00 | $CuO$, 5.00 | 54 | 1.39 | Good | 1.1 |
| 26 | ...... | 0.01 | $CdO$, 0.01 | 55 | 1.35 | Good | 1.2 |
| 27 | ...... | 0.01 | $CdO$, 5.00 | 56 | 1.33 | Good | 1.2 |
| 28 | ...... | 15.00 | $CdO$, 5.00 | 55 | 1.36 | Good | 1.1 |
| 29 | ...... | ...... | $Pb_3O_4$, 0.01 | 54 | 1.35 | Good | 1.1 |
| 30 | ...... | ...... | $Pb_3O_4$, 0.50 | 59 | 0.98 | Good | 2.0 |
| 31 | ...... | ...... | $Pb_3O_4$, 10.00 | 54 | 1.34 | Good | 1.2 |
| 32 | ...... | ...... | $Bi_2O_3$, 0.01 | 53 | 1.36 | Good | 1.1 |
| 33 | ...... | ...... | $Bi_2O_3$, 0.50 | 59 | 0.99 | Good | 1.9 |
| 34 | ...... | ...... | $Bi_2O_3$, 10.00 | 54 | 1.36 | Good | 1.2 |
| 35 | ...... | ...... | $Pr_6O_{11}$, 0.01 | 55 | 1.35 | Good | 1.2 |
| 36 | ...... | ...... | $Pr_6O_{11}$, 0.50 | 58 | 1.01 | Good | 2.0 |
| 37 | ...... | ...... | $Pr_6O_{11}$, 10.00 | 54 | 1.35 | Good | 1.2 |

TABLE 2

| Examples | Zinc paste composition | | | | | Capacitor properties | | | |
| | Glass frits, weight part | | Organo-metallic compounds, weight part | | Metal oxide in use and weight part | Capacitance, nF | Dielectric loss tangent, $\times 10^{-2}$ | Solderability | Tensile strength, kg |
| | A | B | C | D | | | | | |
|---|---|---|---|---|---|---|---|---|---|
| 38 | 1.0 | ... | 1.0 | ... | CuO, 1.0 | 64 | 0.58 | Excellent | 2.1 |
| 39 | 1.0 | ... | 1.0 | ... | $Pr_6O_{11}$, 1.0 | 63 | 0.62 | Excellent | 2.0 |
| 40 | 1.0 | 1.0 | 1.0 | ... | ...... | 64 | 0.59 | Excellent | 2.2 |
| 41 | 1.0 | 1.0 | ... | 1.0 | ...... | 64 | 0.59 | Good | 2.3 |
| 42 | 1.0 | ... | 1.0 | 1.0 | ...... | 63 | 0.62 | Excellent | 2.1 |
| 43 | 1.0 | 1.0 | 1.0 | ... | CdO, 1.0 | 65 | 0.53 | Excellent | 2.4 |
| 44 | 1.0 | 1.0 | ... | 1.0 | $Bi_2O_3$, 1.0 | 64 | 0.57 | Excellent | 2.5 |
| 45 | 1.0 | ... | 1.0 | 1.0 | $Pb_3O_4$, 1.0 | 64 | 0.57 | Excellent | 2.3 |
| 46 | ... | 1.0 | 1.0 | 1.0 | CuO, 1.0 | 65 | 0.55 | Excellent | 2.5 |
| 47 | 1.0 | 1.0 | 1.0 | 1.0 | $Pr_6O_{11}$, 1.0 | 64 | 0.58 | Excellent | 2.3 |
| 48 | 1.0 | 1.0 | 1.0 | 1.0 | ...... | 64 | 0.58 | Excellent | 2.2 |

Examples 49—96

The electroplating of copper was tried as another possible method of creating solderable overlays on the zinc base layers of ceramic capacitors. As set forth in Tables 3 and 4, 48 different zinc pastes of Examples 49—96 were prepared by use of the same zinc powder, glass frits, organotitanium compounds, metal oxides, and vehicle as in Examples 1—48, in various combinations and proportions, and through the same procedure as in Examples 1—48. By use of these zinc pastes the base layers on $SrTiO_3$ ceramic discs were fabricated as in Figure 2 also through the same procedure as in Examples 1—48. These articles were subsequently treated with a 10% by weight aqueous solution of NaOH.

For the electroplating of copper on the zinc base layers formed as above on the ceramic discs, there was used an electroplating bath containing 65 g/l of copper pyrophosphate ($Cu_2P_2O_7 \cdot 3H_2O$), 25 g/l of copper particles, 250 g/l of potassium pyrophosphate ($K_4P_2O_7$), 2 ml/l of ammonia water, and 20 g/l of potassium nitrate ($KNO_3$). At a temperature of 60°C. and a current density of 2 A/dm², the cleaned articles were barrel plated with copper for 10 minutes. Then the articles were rinsed with water.

The thus completed capacitors with the Zn-Cu electrodes were tested as to capacitance, dielectric loss tangent, solderability, and tensile strength by the same methods as in Examples 1—48. As represented in Tables 3 and 4, the results proved to be as favorable as those with the capacitors of the preceding Examples.

TABLE 3

| | Zinc paste composition | | | Capacitor properties | | | |
|---|---|---|---|---|---|---|---|
| Examples | Glass frit A, weight part | Organo-metallic compound C, weight part | Metal oxide in use and weight part | Capacitance, nF | Dielectric loss tangent, $\times 10^{-2}$ | Solderability | Tensile strength, kg |
| 49 | ...... | ...... | ...... | 53 | 1.48 | Good | 1.0 |
| 50 | 0.01 | ...... | ...... | 55 | 1.31 | Good | 1.2 |
| 51 | 5.00 | ...... | ...... | 62 | 0.84 | Good | 2.1 |
| 52 | 15.00 | ...... | ...... | 56 | 1.31 | Excellent | 1.3 |
| 53 | ...... | 0.01 | ...... | 54 | 1.36 | Good | 1.3 |
| 54 | ...... | 5.00 | ...... | 60 | 0.92 | Excellent | 1.9 |
| 55 | ...... | 15.00 | ...... | 55 | 1.30 | Excellent | 1.3 |
| 56 | 0.01 | 0.01 | ...... | 55 | 1.31 | Good | 1.4 |
| 57 | 0.01 | 14.99 | ...... | 54 | 1.35 | Good | 1.2 |
| 58 | 10.00 | 0.01 | ...... | 55 | 1.36 | Good | 1.3 |
| 59 | 0.01 | ...... | $Pb_3O_4$, 0.01 | 56 | 1.26 | Good | 1.2 |
| 60 | 0.01 | ...... | $Pb_3O_4$, 5.00 | 57 | 1.32 | Good | 1.3 |
| 61 | 10.00 | ...... | $Pb_3O_4$, 5.00 | 56 | 1.33 | Good | 1.2 |
| 62 | 0.01 | ...... | $Bi_2O_3$, 0.01 | 55 | 1.30 | Good | 1.2 |
| 63 | 0.01 | ...... | $Bi_2O_3$, 5.00 | 55 | 1.34 | Good | 1.3 |
| 64 | 10.00 | ...... | $Bi_2O_3$, 5.00 | 54 | 1.29 | Good | 1.2 |
| 65 | 0.01 | ...... | $Pr_6O_{11}$, 0.01 | 55 | 1.31 | Good | 1.2 |
| 66 | 0.01 | ...... | $Pr_6O_{11}$, 5.00 | 55 | 1.40 | Good | 1.4 |
| 67 | 10.00 | ...... | $Pr_6O_{11}$, 5.00 | 54 | 1.36 | Good | 1.2 |

TABLE 3—Continued

| Examples | Zinc paste composition | | | Capacitor properties | | | |
|---|---|---|---|---|---|---|---|
| | Glass frit A, weight part | Organo-metallic compound C, weight part | Metal oxide in use and weight part | Capacitance, nF | Dielectric loss tangent, $\times 10^{-2}$ | Solderability | Tensile strength, kg |
| 68 | ...... | 0.01 | CuO, 0.01 | 55 | 1.35 | Good | 1.2 |
| 69 | ...... | 0.01 | CuO, 5.00 | 55 | 1.36 | Good | 1.3 |
| 70 | ...... | 15.00 | CuO, 5.00 | 55 | 1.39 | Good | 1.2 |
| 71 | ...... | 0.01 | CdO, 0.01 | 55 | 1.30 | Good | 1.2 |
| 72 | ...... | 0.01 | CdO, 5.00 | 56 | 1.31 | Good | 1.3 |
| 73 | ...... | 15.00 | CdO, 5.00 | 55 | 1.35 | Good | 1.2 |
| 74 | ...... | 0.01 | $Pb_3O_4$, 0.01 | 54 | 1.39 | Good | 1.3 |
| 75 | ...... | 0.01 | $Pb_3O_4$, 5.00 | 55 | 1.36 | Good | 1.3 |
| 76 | ...... | 15.00 | $Pb_3O_4$, 5.00 | 54 | 1.38 | Good | 1.2 |
| 77 | ...... | ...... | $Bi_2O_3$, 0.01 | 53 | 1.34 | Good | 1.1 |
| 78 | ...... | ...... | $Bi_2O_3$, 0.50 | 59 | 0.98 | Excellent | 2.0 |
| 79 | ...... | ...... | $Bi_2O_3$, 10.00 | 54 | 1.36 | Excellent | 1.2 |
| 80 | ...... | ...... | $Pr_6O_{11}$, 0.01 | 55 | 1.37 | Good | 1.2 |
| 81 | ...... | ...... | $Pr_6O_{11}$, 0.50 | 59 | 0.99 | Excellent | 1.9 |
| 82 | ...... | ...... | $Pr_6O_{11}$, 10.00 | 54 | 1.35 | Excellent | 1.2 |
| 83 | ...... | ...... | CuO, 0.01 | 54 | 1.37 | Good | 1.1 |
| 84 | ...... | ...... | CuO, 0.50 | 60 | 0.95 | Excellent | 2.2 |
| 85 | ...... | ...... | CuO, 10.00 | 55 | 1.36 | Excellent | 1.2 |

TABLE 4

| Examples | Zinc paste composition | | | | | Capacitor properties | | | |
|---|---|---|---|---|---|---|---|---|---|
| | Glass frits, weight part | | Organo-metallic compounds weight part | | Metal oxide in use and weight part | Capacitance, nF | Dielectric loss tangent, $\times 10^{-2}$ | Solderability | Tensile strength, kg |
| | A | B | C | D | | | | | |
| 86 | 1.0 | ... | 1.0 | ... | $Pb_3O_4$, 1.0 | 64 | 0.59 | Excellent | 2.2 |
| 87 | 1.0 | ... | 1.0 | ... | CuO, 1.0 | 64 | 0.58 | Excellent | 2.2 |
| 88 | 1.0 | 1.0 | 1.0 | ... | ...... | 65 | 0.54 | Excellent | 2.3 |
| 89 | 1.0 | 1.0 | ... | 1.0 | ...... | 64 | 0.58 | Excellent | 2.4 |
| 90 | 1.0 | ... | 1.0 | 1.0 | ...... | 63 | 0.62 | Excellent | 2.1 |
| 91 | 1.0 | 1.0 | 1.0 | ... | $Pr_6O_{11}$, 1.0 | 64 | 0.57 | Good | 2.3 |
| 92 | 1.0 | 1.0 | ... | 1.0 | CdO, 1.0 | 64 | 0.58 | Excellent | 2.3 |
| 93 | 1.0 | ... | 1.0 | 1.0 | $Bi_2O_3$, 1.0 | 65 | 0.55 | Excellent | 2.5 |
| 94 | ... | 1.0 | 1.0 | 1.0 | $Pb_3O_4$, 1.0 | 64 | 0.59 | Excellent | 2.3 |
| 95 | 1.0 | 1.0 | 1.0 | 1.0 | CuO, 1.0 | 64 | 0.59 | Excellent | 2.3 |
| 96 | 1.0 | 1.0 | 1.0 | 1.0 | ...... | 63 | 0.63 | Excellent | 2.1 |

# 0 064 211

## Claims

1. A method of forming electrodes (34) on ceramic bodies (24) to provide electronic components (32), comprising the steps of coating an electroconductive paste composed principally of zinc powder on desired surfaces (26, 28) of each ceramic body (24), and baking the coatings of the electroconductive paste at a temperature ranging from the melting point to boiling point of zinc, thereby forming electroconductive base layers (22) on the ceramic body, characterized in that a solderable overlay (30) is formed on each base layer by electroplating a more solderable metal thereon.

2. A method of forming electrodes on ceramic bodies as claimed in claim 1, characterized in that the more solderable metal is nickel.

3. A method of forming electrodes on ceramic bodies as claimed in claim 1, characterized in that the more solderable metal is copper.

## Patentansprüche

1. Verfahren zum Anbringen von Elektroden (34) an keramischen Körpern (24) zur Ausstattung von elektronischen Bauelementen (32), bestehend aus folgenden Schritten: die gewünschten Oberflächen (26, 28) von jedem keramischen Körper (24) werden mit einer elektrisch leitenden, im wesentlichen aus Zinkpulver bestehenden Paste überzogen, und die aus der elektrisch leitenden Paste bestehenden Überzüge werden bei einer Temperatur gebrannt, die im Bereich zwischen dem Schmelzpunkt und dem Siedepunkt von Zink liegt, wodurch elektrisch leitende Grundschichten (22) am keramischen Körper gebildet werden, dadurch gekennzeichnet, daß an jeder Grundschicht eine lötbare Deckschicht (30) durch Galvanisieren eines besser lötbaren Metalls angebracht wird.

2. Verfahren zum Anbringen von Elektroden an keramischen Körpern gemäß Anspruch 1, dadurch gekennzeichnet, daß der besser lötbare Metall Nickel ist.

3. Verfahren zum Anbringen von Elektroden an keramischen Körpern gemäß Anspruch 1, dadurch gekennzeichnet, daß der besser lötbare Metall Kupfer ist.

## Revendications

1. Procédé pour former des électrodes (34) sur des corps céramiques (24) afin de fabriquer des composants électroniques (32), comprenant les stades de revêtement des surfaces désirées (26, 28) de chaque corps céramique (24) avec une pâte conductrice de l'électricité composée principalement de poudre de zinc, et de cuisson des revêtements de la pâte conductrice d'électricité à une température comprise entre le point de fusion et le point d'ébullition du zinc, afin de former des couches de base (22) électroconductrices sur le corps céramique, caractérisé en ce qu'une couche de recouvrement (30) soudable est formée sur chaque couche de base par dépôt électrolytique d'un métal plus soudable.

2. Procédé pour former des électrodes sur des corps céramiques comme revendiqué dans la revendication 1, caractérisé en ce que le métal plus soudable est le nickel.

3. Procédé pour former des électrodes sur des corps céramiques comme revendiqué dans la revendication 1, caractérisé en ce que le métal plus soudable est le cuivre.

12

FIG.1

FIG.2

FIG.3

FIG.4